Europäisches Patentamt

European Patent Office

Office européen des brevets

(11) Publication number: **0 163 401**
A2

# (12) EUROPEAN PATENT APPLICATION

(21) Application number: 85302700.1

(22) Date of filing: 17.04.85

(51) Int. Cl.⁴: **G 02 B 6/44**

(30) Priority: 22.05.84 GB 8412341

(43) Date of publication of application:
04.12.85 Bulletin 85/49

(84) Designated Contracting States:
AT BE CH DE FR IT LI LU NL SE

(71) Applicant: STANDARD TELEPHONES AND CABLES
PUBLIC LIMITED COMPANY
190 Strand
London, WC2R 1DU(GB)

(72) Inventor: Pitt, Gilles David
43 Farmadine
Saffron Walden Essex(GB)

(72) Inventor: Extance, Philip
68 Chalmers Road
Cambridge CB1 3SX(GB)

(72) Inventor: Jones, Roger Edward
Farmfield 20 High Street
Little Shelford Cambridge CB2 5ES(GB)

(74) Representative: Capsey, Sydney Ross
Standard Telephones and Cables Patent Department
Edinburgh Way
Harlow Essex CM20 2SH(GB)

(54) Cables.

(57) Amorphous metallic material in ribbon form is employed to provide hermeticity of cable elements, particularly optical fibres. The metallic glass CuZr has a low permeability for hydrogen, particularly when erbium is included. Thus sealing optical fibres (1) in amorphous metal tubes (3) will prevent increase in attenuation of such fibres when used in submarine cables by preventing contact with hydrogen generated in such cables during use thereof.

0163401

## CABLES

This invention relates to cables and in particular, but not exclusively, to telecommunications cables, which may or may not incorporate optical fibres, and methods of manufacturing them.

During use of submarine telecommunications cables hydrogen gas has been found to accumulate in the cable core. This has proved to be the case for both conventional coaxial metallic conductor cables and for optical fibre cables. The existence of free hydrogen in silica optical fibre cables is particularly undesirable since if such hydrogen can permeate into the silica of the fibres their attenuation is greatly increased, and cable performance is adversely affected, this being particularly relevant to the 1.3 and 1.55 micrometer systems.

The mechanism serving to produce the hydrogen in submarine cables is presently not fully understood and thus the present invention has, in part, proceeded from the need to prevent any hydrogen so generated reaching and adversely affecting optical fibre cores, rather than the more fundamental problem of preventing the generation of the hydrogen in the first place. The problem possibly stems from permeation of sea water into the cable construction, aided by the high pressures pertaining on the sea bed, despite the cable construction being formed in a supposedly hermetically sealed manner. Once present inside the cable the water serves to permit the build up of an electrical voltage between metallic elements therein, such as steel reinforcing wires and an aluminium tube surrounding the fibres, and this voltage serves to generate hydrogen from the sea water. (K. Mochizuki et al "Transmission loss increase in optical fibres due to hydrogen permeation" Electronics Letters 1st September 1983 Vol 18 No 18 pp 743-5).

According to one aspect of the present invention there is provided a cable incorporating an amorphous metallic material.

According to another aspect of the present invention there is provided a cable including amorphous metal strip comprised as a protective layer for a cable element.

Embodiments of the invention will now be described with reference to the accompanying drawings, which are not drawn on the same scale, in which:

Fig. 1 illustrates a cross-section through an hermetic optical fibre construction;

Fig. 2 illustrates a cross-section through a composite optical fibre strip construction;

Fig. 3 illustrates a cross-section through a cable element including a plurality of optical fibres prior to closure of a sheath disposed therearound, and

Fig. 4 illustrates a cable construction incorporating a fibre strip of Fig. 2 and a protective sheath.

In order to prevent the possibility of hydrogen reaching the silica of the optical fibre core it is ideally required that the fibre be disposed within a body which is impermeable to hydrogen. Most materials are permeable to hydrogen to a greater or lesser extent. Optical fibres may be conventionally hermetically sealed in metallic tubes for example of copper or aluminium, however it can be shown that neither of these as pure metals provide an effective barrier for hydrogen over a

- 3 -

0163401

25 year life span of a cable. Whereas it is calculated that aluminium oxide or beryllium oxide could provide a barrier to hydrogen over a 25 year life span, in practice use in cables is not considered practicable since additional mechanical and environmental protection would be required.

It has been shown (D.J. Mitchell et al J. App. Phys. 53, 970, (1982)) that the diffusion constant of hydrogen in a metal may be greatly reduced in dilute alloys as a result of trapping the hydrogen therein. In particular dilute copper alloys, containing zirconium or titanium, or the rare earth element erbium, are particularly effective for trapping hydrogen for periods in excess of a projected 25 year cable life span.

Amorphous metals can be made in strip form by rapidly quenching molten alloys on a rapidly spinning cooled wheel. This process produces a ribbon or strip typically 40 micrometres thick and of width typically 1 cm or greater. Such materials offer high strength, flexibility, high yield strength and forming and bonding properties.

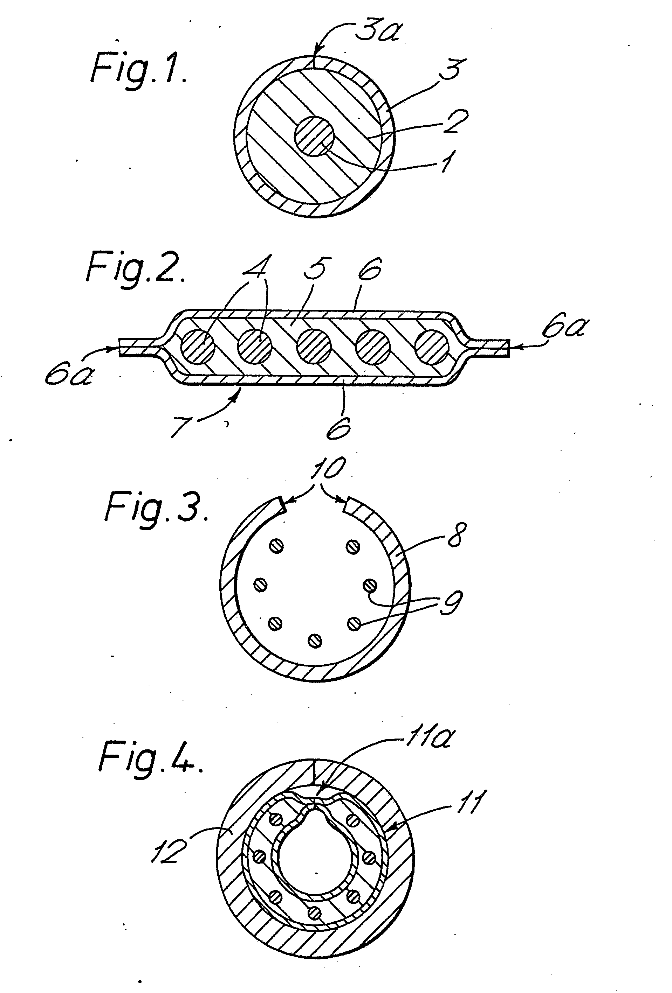

Amorphous metals which can be manufactured include metallic glass types such as the metallic glass brazing alloys, for example CuZr, which alloy as mentioned above is effective for trapping hydrogen. We thus propose to use such metallic glass ribbon/strip in cable manufacture in such a manner as to protect elements which are adversely affected by the presence of hydrogen, for example silica optical fibres. One such use is illustrated in Fig. 1. An optical fibre core 1 is provided with a conventional primary coatings/buffer layer 2. An amorphous metal ribbon 3 is longitudinally applied to the primary coated fibre and the longitudinal edges of the ribbon sealed together at 3a. Several of the metallic glass alloys, for example CuZr, can be brazed and we have successfully achieved spot welding, thus sealing with good diffusion bonds is readily attainable. Alternatively, other copper amorphous alloys which inhibit the passage of hydrogen may be employed for the above and other cable applications, see below for example. Such alloys include CuTi and CuHf. The hydrogen trapping properties of these amorphous alloys may be improved by the incorporation of rare earth elements, for example erbium as mentioned above. Such a composition may comprise 70% Cu, 29% Zr and 1% Er. The percentage of the rare earth could be considerably smaller than 1%. Large proportions of erbium, for example, would not be economic.

An alternative optical element structure is illustrated in Fig. 2. It comprises five optical fibres 4 each of which is provided with primary coating material 5. The primary coating material is, however, common to all fibres and is in strip form. Such an arrangement may be achieved by drawing the optical fibres simultaneously and passing them in a parallel manner through a suitable coating apparatus. A respective amorphous metal ribbon 6 is disposed on each side of the fibre/coating material strip element to sandwich it therebetween and the adjacent longitudinal edges of the ribbons 6 sealed together at 6a by welding or brazing. Thus there is provided a composite optical fibre strip 7. Whereas the illustrated version of strip 7 includes five optical fibres other numbers thereof (two or more) may be employed. Such a composite optical fibre strip 7 may be wound helically around a central string. The high strength and high yield strength of the metallic glasses is such that an optical fibre provided with a layer thereof as in Figs. 1 or 2 may not require the use of additional strength members. Typically the yield strength of such metallic glasses is of the order of 1500-2000 Newtons per sqr mm, and Youngs Modulus is of the order of 150 kilo Newtons per sqr mm.

Other possible uses of the amorphous metal in cables are illustrated in Figs. 3 and 4. In Fig. 3 there is indicated an amorphous metal C-shaped section 8 into which a number of secondary coated optical fibres 9 are introduced prior to closing of the edges 10 of the C together and sealing them together. The interstital spaces in the closed C-shaped section may be filled with, for example, conventional water blocking gels as appropriate. In Fig. 4 there is illustrated a composite optical fibre strip 11, manufactured as described with respect to Fig. 2 for strip 7, which has been formed into a cylindrical shape, its edges joined at 11a, and surrounded by a conventional protective tube 12 formed from a copper or aluminium C-shaped section. A strength member (not shown) may be disposed in the cavity formed in the cylindrical optical fibre member. Several layers of the amorphous metal ribbon may be used if increased thickness is required. The amorphous metal ribbons will generally be manufactured in finite lengths and wound onto reels whereas extremely long continuous lengths of optical fibre, very much longer than the ribbon wound on a reel, may be drawn from a single preform. However, continuous sheathing of optical fibres is possible with the amorphous metal ribbon since welding between reels can be achieved using standard techniques. The metallic glass ribbon has a high electrical conductivity and can thus be employed to transmit power if required, although the resistivity is approximately ten times that of copper metal.

The amorphous nature of the surface of the ribbon permits deposition of surface materials such as silicon nitride or activated carbon which are uniformally spread, leaving no pin holes, because of the smoothness of the surface. Such coatings may be employed to provide increased hermeticity.

Whereas the invention has been specifically described with respect to the application of amorphous metal strips in optical fibre cable manufacture for the prevention of hydrogen permeation it is not to be considered as so limited. Such amorphous metal strips may be employed in any cable construction where it is desired to prevent contact betwen a cable element and hydrogen, where it is desired to provide improved hermeticity, or where the flexibility of the strips will facilitate cable processing.

CLAIMS:-

1.        A cable characterised by the incorporation of an amorphous metallic material.

2.        A cable characterised by the inclusion of amorphous metallic strip comprised as a protective layer for a cable element.

3.        A cable as claimed in claim 1 or claim 2, characterised in that the amorphous metallic material serves to prevent contact between another element of the cable and hydrogen gas present in the cable.

4.        A cable as claimed in claim 1 or claim 2, characterised in that the amorphous metallic material serves to hermetically seal one or more elements of the cable.

5.        A cable as claimed in claim 1 or claim 2, characterised in that the amorphous metallic material serves to provide one or more flexible cable strength members.

6.        A cable as claimed in claim 1, characterised in that the amorphous metallic material comprises a layer (3) on an optical fibre (1,2) which layer has been formed by applying a ribbon (3) of the amorphous metallic material longitudinally to the optical fibre and sealing the longitudinal edges (3a) of the ribbon together.

7.        A cable as claimed in claim 1 and comprising a composite optical fibre strip characterised in that the fibre strip includes two or more optical fibres (4) arranged in a strip of primary coating material (5) and a respective ribbon (6) of the amorphous metallic material is disposed on each side of the strip of primary coating material (5) such that the strip is sandwiched therebetween, adjacent longitudinal edges of the ribbons (6) being sealed together (6a).

8.        A cable as claimed in claim 7 characterised in that the composite optical fibre strip (11) is formed into a cylindrical shape with its longitudinal edges joined together (11a) and wherein a protective tube (12) is provided over the cylindrically shaped strip.

9.      A cable as claimed in claim 1 characterised in that the amorphous metallic material comprises a closed C-shaped section (8), a number of optical fibres (9) having been disposed in the C-shaped section prior to closing together of the edges (10) of the C-shaped section and sealing the edges together.

10.     A cable as claimed in any one of the preceding claims characterised in that the amorphous metallic material comprises a metallic glass.

11.     A cable as claimed in claim 10 wherein the metallic glass is a metallic glass brazing alloy.

12.     A cable as claimed in claim 10 wherein the metallic glass comprises CuZr, CuTi or CuHf with or without the inclusion of erbuim.

13.     A cable as claimed in claim 10 and wherein the metallic glass is comprised of 70% Cu, 29% Zr and 1% Er.

14.     A cable as claimed in claim 10 wherein the metallic glass is provided with a surface coating of silicon nitride or activated carbon.

Fig.1.

Fig.2.

Fig.3.

Fig.4.